# EUROPEAN PATENT APPLICATION

(11) **EP 4 831 218 A1**
(43) Date of publication of application: **28.10.2026**
(21) Application number: 25382410.6
(22) Date of filing: 23.04.2025
(51) Int. Cl.: C08G 59/24, C08F 2/50, C08G 59/56, C08G 59/68, C08L 63/00, C09J 163/00, C08G 59/40

(54) **PHOTOPOLYMERIZABLE COMPOSITION, USES THEREOF, AND METHODS USING THE SAME**

(71) Applicant: Institut Quimic de Sarria CETS, 08017 Barcelona (ES); Glooers Technologies S.L, 08017 Barcelona (ES)
(72) Inventor: Gómez Sánchez, Javier, Barcelona (ES); Borrós Gómez, Salvador, Barcelona (ES); Ripoll Nonell, Francisco Javier, Barcelona (ES)
(74) Representative: Curell Suñol S.L.P.

(57) **Abstract**

A photopolymerizable composition curable by frontal polymerization comprising a cycloaliphatic epoxy resin, a cationic photoinitiator, a thermal acid generator, and a reaction front modulator agent for modulation the reaction front of the photopolymerization reaction, wherein said reaction front modulator agent is selected from the group consisting of a modified amino acid derivative, a polyol, an oxetane, and a combination thereof. The invention also relates to uses of said composition as adhesive and to manufacture composite materials.

## Description

### Field of the invention

The invention relates to a photopolymerizable composition, preferably a photopolymerizable composition curable by frontal polymerization. The invention also relates to uses of said photopolymerizable composition and methods using the same.

### State of the art

Photopolymerizable compositions are materials that undergo curing or hardening processes through exposure to light, for example ultraviolet (UV) light.

Traditional photopolymerizable systems often rely on acrylate-based resins in combination with radical photoinitiators to initiate polymerization. In recent years, there has been increasing interest in cationic photopolymerization systems, which utilize epoxy resins and cationic photoinitiators. These systems offer several advantages, including lower shrinkage, enhanced chemical resistance, and the ability to cure in the presence of oxygen. However, challenges remain in optimizing the cure speed and achieving high-performance mechanical properties, particularly when targeting challenging applications like for example in adhesives and in composite materials.

Another aspect of photopolymerizable compositions is the need for precise control over the curing process. This is particularly important in applications where the curing process can affect the properties of the final cured composition, and where the integrity and mechanical properties of the final product or cured composition are critical. This is again the case in challenging applications like in adhesives and in composite materials.

Frontal polymerization is also a known process where a self-sustaining reaction front propagates through a monomer, converting it into a polymer. Unlike traditional polymerization, which typically occurs throughout the entire volume of material simultaneously (bulk polymerization), frontal polymerization occurs in a localized region that moves through the material. This method provides some advantages such as allowing a localized reaction, a rapid curing, and is more energy-efficient than traditional methods that require uniform heating across the entire material. Despite its benefits, relying on frontal polymerization adds more complexity because controlling the propagation of the polymerization front is challenging. Factors such as reaction kinetics, heat transfer, and material composition can significantly affect the stability and uniformity of the polymerization process, and are hard to match with the required properties, mechanical of the final products or cured compositions. This complexity further increases in challenging applications such as adhesives or composites materials, as the properties of the other materials involved, for example the properties of the substrates or the other components of the composite can affect the performance of the polymerizable composition and must be considered.

Therefore, there remains a need for improved photopolymerizable compositions, preferably curable by frontal polymerisation, that allow an efficient, rapid, precisely controllable, and robust curing process, and allow to generate a final product or cured composition that meets the requirement for a broader range of industrial applications.

### Summary of the invention

It is an object of the invention to provide an improved photopolymerizable compositions that allows to be cured by a precisely controllable, efficient, rapid, and robust curing process, while generating a final product or cured composition that meets the requirement for a broad range of industrial applications.

This purpose is achieved by a composition of the type indicated at the beginning, characterized in that said composition comprises
[a] a cycloaliphatic epoxy resin;
[b] a cationic photoinitiator;
[c] a thermal acid generator; and
[d] a reaction front modulator agent for modulation the reaction front of the photopolymerization reaction, wherein said reaction front modulator agent is selected from the group consisting of a modified amino acid derivative, a polyol, an oxetane, and a combination thereof.

The addition of a reaction front modulator agent according to the invention provides several advantages that were not foreseeable in view of the prior art, preferably in applications involving the use of photopolymerizable compositions curable by frontal polymerization as adhesives or for the manufacturing of composite materials. Thanks to the presence of a reaction front modulator agent such as a modified amino acid derivative, a polyol, an oxetane, and a combination thereof, the photopolymerizable composition according to the invention can be cured in a controllable and robust manner by frontal photopolymerization, while the properties of the obtained cured or hardened composition can be tailored to a range of specific applications. By means of a reaction front modulator agent according to the invention, it is possible to control the activation capacity and the reactivity of the composition such that a sustained frontal polymerisation can be initiated by light, for example UV light, and propagation of the front can be achieved over the whole extension of the composition, thus resulting a cured composition wherein the final properties have been tailored to specific applications, like for example its use as adhesive or its use for manufacturing composite materials such as glass or carbon fibre composite materials. Another advantage of the invention is that it provides a single curable composition, in contrast with other photopolymerisable compositions which require the use of two fractions that must be kept separated and be combined before triggering the curing process as they are not stable in their combined from. The invention also provides a composition with an extended shelf -life and allows a simpler and more versatile use of the composition according to the invention in applications such as for example adhesives and composite materials.

The addition of a reaction front modulator agent, such as a modified amino acid derivative, a polyol, and a combination thereof, provides further advantages that were not foreseeable in view of the prior art known to the best knowledge of the inventors. Thanks to the presence of a reaction front modulator agent such as a modified amino acid derivative, a polyol, and a combination thereof, it is possible to reduce the reactivity of the composition according to the invention, without compromising other properties such as for example its activation capacity. This allows further control of the polymerization reaction without negatively affecting its ability to be activated by light. Thus, a sustained frontal polymerisation can be achieved without negatively affecting the final properties of the cured composition. This results into a composition that can further be tailored to specific applications, like for example for use as adhesive or for manufacturing composite materials such as glass and carbon fibre composite materials.

Further, including an oxetane to the composition according to the invention as a reaction front modulator agent, for example including TMPO or di-TMPO, provides a more reactive basal formulation to work with, which can be further advantageously modified by other reaction front modulator agent according to the invention, thus providing improved control over the frontal polymerization reaction. For example, the addition of an oxetane allows to obtain a photopolymerizable or photocurable composition with broader thermodynamic and kinetic ranges. This increases the capacity to control the frontal polymerization reaction and allowing to use the composition according to the invention for a broader range of applications.

The inclusion of a reaction front modulator agent comprising a modified amino acid derivative and/or a polyol or a combination thereof, as stabilizing agent, in combination with an oxetane as a reactivity enhancing agent, allows to obtain a photopolymerizable composition wherein improved control over the frontal polymerization reaction, and wherein broader thermodynamic and kinetic ranges to adjust the frontal polymerization reaction are achieved, thanks to the synergistic effects of these compounds. This makes the composition according to the invention further advantageous to be used for a broader range of applications, preferably in adhesives or composite materials, particularly in frontal polymerization applications.

It is another object of the invention to provide a composition of the type indicated at the beginning characterized in that said composition comprises a cycloaliphatic epoxy resin, a cationic photoinitiator, a thermal acid generator, and a stabilizing agent selected from the group consisting of a modified amino acid derivative, a polyol, and a combination thereof.

It is another object of the invention to provide a composition of the type indicated at the beginning characterized in that said composition comprises a cycloaliphatic epoxy resin, a cationic photoinitiator, a thermal acid generator, and an oxetane as a reactivity enhancing agent.

In the context of the invention, a cycloaliphatic epoxy resin is a type of epoxy resin where the epoxide groups are attached to a cycloaliphatic ring structure. These resins are characterized by their cyclic backbone, which differentiates them from the more common bisphenol-A-based (aromatic) epoxies. Examples of cycloaliphatic resins include 3,4-epoxycyclohexylmethyl 3,4-epoxycyclohexanecarboxylate (ECC), Bis(3,4-epoxycyclohexylmethyl) adipate, vinylcyclohexene dioxide (VCHD), Hydrogenated Bisphenol A, ERL-4221 (Dow Chemicals), ERL-4206 (Dow Chemicals), and cyclohexene oxide.

In the context of the invention, a cationic photoinitiator is a molecule that generates reactive cations when exposed to light, for example UV or visible light. These cations can initiate the polymerization of monomers, such as epoxy resins, in photopolymerizable compositions. Preferred examples of cationic photoinitiators include iodonium salts such as diaryliodonium hexafluorophosphate (PF₆⁻) and diaryliodonium hexafluoroantimonate (SbF₆⁻), and sulfonium salts such as triarylsulfonium hexafluorophosphate (PF₆⁻) and triarylsulfonium hexafluoroantimonate (SbF₆⁻). Further preferred examples of cationic photoinitiators to be used in the composition according to the invention are Bis-(4-t-butyphenyl)-iodonium hexafluorophosphate, Bis-(4-t-dodecylphenyl)iodonium hexafluoroantimonate, 4-isopropyl-4'-methyldiphenyliodonium tetrakis (pentafluorophenyl)borate, (sulfanediylbenxene-4,1-diyl)bis(diphenylsulfonium)bis(hexafluoroantimonate). The common characteristic of these preferred photo initiators is their high reactivity, and their strong acid generation upon UV exposure. Hexafluoro antimonate based photo initiators are even further preferred.

In the context of the invention, a thermal acid generator (TAG) is a substance that produces an acid when heated.

In the context of the invention, a front modulator agent is a substance for example stabilizing agent, a reactivity enhancing agent, or a combination of both, that is added to the polymerization mixture to control and influence the behaviour of the reaction front. A front modulator agent can affect various aspects of the polymerization process, such as the speed, stability, and pattern of the propagating front, thus allowing a precise control of the polymerization reaction.

In the context of the invention, a stabilizing agent means a compound that provides stability to a photopolymerizable composition, thus allowing a precise control of the polymerization reaction, among others by reducing the reactivity of the composition.

In the context of the invention, a precise control of the polymerization reaction means to modify both the activation capacity and/or the reactivity of the photopolymerizable composition according to the invention such that said it is possible to modulate the speed, the stability, and/or pattern of the propagating front. Indirectly, by controlling the polymerization reaction, the final properties, for example the final mechanical properties or the final adhesion properties, of the cured composition can modulated, for example, to tailored them to specific applications.

In the context of the invention, a reactivity enhancing agent means a compound that allows increasing the reactivity of the photopolymerizable composition according to the invention. By increasing the reactivity of the composition, it is possible the modulate the speed, the stability, and/or pattern of the propagating front and the final properties, for example the final mechanical properties or the final adhesion properties, of the cured composition.

It is another object of the invention to provide a use of a front modulator agent for modulating the reaction front of the photopolymerization reaction, wherein said reaction front modulator agent is selected from the group consisting of a modified amino acid derivative, a polyol, an oxetane, and a combination thereof.

It is another object of the invention to provide a use of a stabilizing agent for modulating, preferably for stabilizing, the reaction front of the photopolymerization reaction, wherein said stabilizing agent is selected from the group consisting of a modified amino acid derivative, a polyol, and a combination thereof.

It is another object of the invention to provide a use of the composition according to the invention as an adhesive.

In the context of the invention, an adhesive or an adhesive composition is to be understood as a sticky substance that joins two substrates permanently.

It is a further object of the invention to provide an adhesive composition comprising a composition according to the invention. Preferably, the invention provides an adhesive photopolymerizable composition curable by frontal polymerization comprising a front modulator agent for modulating the reaction front of the photopolymerization reaction, wherein said reaction front modulator agent is selected from the group consisting of a modified amino acid derivative, a polyol, an oxetane, and a combination thereof.

It is a further object of the invention to provide the use of a front modulator agent for modulating the reaction front of the photopolymerization reaction in an adhesive photopolymerizable composition curable by frontal polymerization, wherein said reaction front modulator agent is selected from the group consisting of a modified amino acid derivative, a polyol, an oxetane, and a combination thereof.

The composition according to the invention advantageously provides a single component adhesive composition that can be tailored to the requirements of the substrates to be bonded and to the applications. Advantageously, an adhesive composition comprising a composition according to the invention will have tailored properties, such as for example, an increased adhesion, improved mechanical strength and/or a flexibility adapted to the desired application. The manufacturing processes where said adhesive is used also benefit from the presence of a composition according to the invention. For example, the adhesive composition to be used in continuous manufacturing process, thus resulting in a more cost/effective process.

It is a further object of the invention to provide a use of the composition according to the invention for manufacturing a composite material.

It is a further object of the invention to provide a composite material comprising a composition according to the invention.

The composition according to the invention advantageously provides a single component polymer-based matrix to be used in composite materials, that can be tailored to the requirements of the other materials used in the composite and that can be adapted to the needs of the manufacturing process and to the applications of the obtained composites. Advantageously, a composite material comprising a composition according to the invention will have tailored properties, such as for example, an increased mechanical strength and/or a flexibility adapted to the desired application. The manufacturing process of said composite also benefits from the fact that it comprises a composition according to the invention. For example, a continuous manufacturing process of composite materials can be implemented, thus resulting a more cost/effective process and final product.

It is a further object of the invention to provide a polymer-based matrix for a composite material, said polymer-based matrix comprising a composition according to the invention.

It is a further object of the invention to provide a use of a composition according to the invention as a polymer-based matrix for a composite material, preferably as a photopolymerizable polymer-based matrix for a composite material.

It is a further object of the invention to provide a method to adhere a first substrate and a second substrate to each other, wherein said method comprises the steps of:
[i] applying a layer of a composition according to the invention to one of said first or second substrates;
[ii] arranging the other of said first or second substrates on said layer in a position such as to partially cover said layer and such as to leave at least one edge of said layer uncovered; and
[iii] irradiating said edge of said layer uncovered with a light source adapted to trigger the frontal photopolymerization of said composition.

It is a further object of the invention to provide a method for manufacturing a composite material, wherein said composite material is a fibre-based composite material comprises a plurality of fibres embedded in a polymer-based matrix, wherein said method comprises the steps of:
[i] impregnating said plurality of fibres with a composition according to the invention;
[ii] irradiating said impregnated fibres with a light source adapted to trigger the photopolymerization of said composition to cure said composition around said plurality of fibres such as to obtain said fibre-based composite material.

The invention further includes a number of preferred features that are object of the dependent claims and the utility of which will be highlighted hereinafter in the detailed description of an embodiment of the invention.

Preferably, said composition is a composition curable by frontal polymerisation or by a frontal polymerization reaction. More preferably, said composition is a composition curable by frontal photopolymerization or by a frontal photopolymerization reaction.

In the context of the invention, a composition curable by frontal polymerisation is a composition that can be completely cured by frontal polymerisation. This means that a sustained frontal polymerisation reaction can be obtained and that no halting of the polymerization front occurs. Compositions wherein a frontal polymerization reaction can be initiated but wherein the polymerization front does not propagate along the whole area where the composition is applied are not considered curable by frontal polymerisation.

In the context of the invention, a frontal photopolymerization reaction is to be understood as a reaction where the photoinitiator is activated by light, e.g. UV light and starts the polymerization of the resin. The photopolymerization reaction releases heat, which in turn activates the thermal acid generator. The acid produced accelerates the polymerization reaction, creating a self-sustaining reaction front. This reaction front propagates or moves through the material, curing the resin without the need for continuous light exposure.

Preferably, said cycloaliphatic resin is selected from the group consisting of 3,4-epoxycyclohexylmethyl 3,4-epoxycyclohexanecarboxylate, Bis(3,4-epoxycyclohexylmethyl) adipate, and Hydrogenated Bisphenol A, and a combination thereof.

Preferably, said reaction front modulator agent is an oxetane. More preferably, said oxetane is selected from the group consisting of TMPO, di-TMPO, and a combination thereof. Including an oxetane to the base formulation of the composition according to the invention, for example including TMPO or di-TMPO, provides a more reactive basal formulation to work with, which can be advantageously modified by the stabilizing agents according to the invention, thus providing improved control of the polymerization reaction, and providing broader thermodynamic and kinetic ranges to adjust the frontal polymerization reaction, thus allowing to use the composition according to the invention for a broader range of applications.

In the context of the invention, the term oxetane refers to an organic compound containing a four-membered ring consisting of three carbon atoms and one oxygen atom. Preferred examples of oxetanes include 3-Ethyloxetan-3-methanol (TMPO) and Bis(3-Ethyl-3-Oxetanylmethy) Ether (di-TMPO).

Preferably, said reaction front modulator agent is a polyol. Adding a polyol allows to improve the control over the polymerization reaction, by allowing to modulate, preferably reduce, the reactivity of the composition. More preferably, said polyol is selected from the group consisting of a polyester diol with a molecular weight within the range from 200 g/mol to 2000 g/mol, a polyester glycol with a molecular weight within the range from 200 g/mol to 2000 g/mol, and diethylene glycol. Even more preferably, said polyol is selected from the group consisting of a polyester diol with a molecular weight within the range from 600 g/mol to 1000 g/mol, a polyester glycol with a molecular weight within the range from 200 g/mol to 600 g/mol, and diethylene glycol.

In the context of the invention, the term "polyol" refers to an organic compound that contains multiple hydroxyl groups (-OH). These compounds are also known as polyhydric alcohols. Examples of polyols include, but are not limited to, polyester polyols such as polyester diols, which contain two hydroxyl groups (-OH) at the ends of the polymer chain and can have different molecular weights, for example ranging from 200 g/mol (i.e. PED200) to 2000 g/mol (i.e. PED2000), polyester glycols, which contain multiple hydroxyl groups along the polymer chain and can also have different molecular weights of different molecular weights, ranging from 200 g/mol (i.e. PEG200) to 2000 g/mol (i.e. PEG2000), and diethylene glycol (DEG) also known as 2,2'-oxydiethanol. Preferred examples of polyols to be used in the composition according to the invention are PED200, PED400, PED600, PED800, PED1000, PEG200, PEG400, PEG600, and PEG800.

Preferably, said reaction front modulator agent is a modified amino acid derivative, more preferably a polymer-modified amino acid derivative or an acylated amino acid derivative, or a combination of both. Adding a modified amino acid derivative allows to improve the control over the polymerization reaction by allowing to modulate, preferably reduce, the reactivity of the composition.

In the context of the invention, the terms "modified amino acid derivative" refer to a compound comprising at least one amino acid residue covalently bonded to a modifying chemical group. It includes single amino acids or short oligopeptides containing for example 2 o 3 amino acids. In the context of the invention, the modifying chemical group can be a polymer chain, thus resulting in "polymer-modified amino acid derivative" or an acyl group, thus resulting in an acylated amino acid derivative. Examples of amino acids include, but is not limited to, Lysine, Histidine, and Serine, and examples of oligopeptides in include, but is not limited to, Cys-Lys-Lys-Lys, Cys-His-His-His. Examples of the polymer chain may be selected from, but is not limited to, poly(beta-amino)ester (PBAE), poly(ethylene glycol) (PEG), poly(lactic acid) (PLA), poly(glycolic acid) (PGA), or copolymers thereof. Examples of acyl groups include but are not limited to acyl group containing between 2 and 20 carbon atoms, preferably between 8 and 14 carbon atoms, such as a decanoyl group or a dodecanoyl group. Preferred examples of amino acid derivative to be used to be used in the composition according to the invention are acylated amino acids, such as N-Dodecanoyl-Serine and N-Tetradecanoyl-Serine, or PBAE-modified oligopeptides such as a PBAE-modified Cysteine-Trilysine and a PBAE-modified Cysteine-Trihistidine.

In a preferred embodiment, the composition according to the invention comprises
[a] a cycloaliphatic epoxy resin;
[b] a cationic photoinitiator;
[c] a thermal acid generator; and
[d1] a modified amino acid derivative.

In a preferred embodiment, the composition according to the invention comprises
[a] a cycloaliphatic epoxy resin;
[b] a cationic photoinitiator;
[c] a thermal acid generator; and
[d2] a polyol.

In a preferred embodiment, the composition according to the invention comprises
[a] a cycloaliphatic epoxy resin;
[b] a cationic photoinitiator;
[c] a thermal acid generator; and
[d3] an oxetane.

Preferably, said reaction front modulator agent is a combination of a modified amino acid derivative and/or a polyol and/or an oxetane. More preferably, said reaction front modulator agent is a combination of a modified amino acid derivative and/or a polyol, and an oxetane.

Preferably, said composition further comprises a filler as a conductivity modifying agent, more preferably a thermally conductive filler such as alumina and/or boron nitride, and/or a non-thermally conductive filler such a pyrogenic and/or fumed silica.

Preferably, said cationic photoinitiator is a cationic photoinitiator of the onium salt type, more preferably said cationic photoinitiator is onium salt selected from the group consisting of an iodonium salt and a sulfonium salt. Even more preferably, said cationic photoinitiator is selected from the group consisting of diaryliodonium hexafluorophosphate (PF₆⁻), diaryliodonium hexafluoroantimonate (SbF₆⁻), triarylsulfonium hexafluorophosphate (PF₆⁻), triarylsulfonium hexafluoroantimonate (SbF₆⁻). In a further preferred embodiment said cationic photoinitiator is selected from the group consisting of Bis-(4-t-butyphenyl)-iodonium hexafluorophosphate, Bis-(4-t-dodecylphenyl) iodonium hexafluoroantimonate, 4-isopropyl-4'-methyldiphenyliodonium tetrakis (pentafluorophenyl)borate, and (sulfanediylbenxene-4,1-diyl)bis(diphenylsulfonium)bis (hexafluoroantimonate).

Preferably, the composition according to the invention has a glass transition temperature (Tg) within the range from 80°C to 160°C during curing, more preferably during curing at room temperature. In a further preferred embodiment, a glass transition temperature (Tg) within the range from 120°C to 150°C during curing is obtained. These values a surprisingly high for a curing system, particularly when curing is performed at room temperature (25°C). Tg is determined by DMA as explained in the Example below.

Preferably, said composition further comprises an acrylate resin. More preferably, said acrylate resin is selected from the group consisting of an epoxy acrylate resin, a urethane acrylate resin, a polyester acrylate resin, and a combination thereof. Preferred examples of acrylate resins include Bisphenol A Epoxy Diacrylate resin), and an Hexanedioic acid-based polymer with 1,6-hexanediol, 1,3-isobenzofurandione, 5-isocyanato-1-(isocyanatomethyl)-1,3,3-trimethylcyclohexane resin (CAS N°: 55818-57-0).

The composition according to the invention also allows using different strategies to provide a hybrid frontal polymerization system. Combining cycloaliphatic epoxy resins and oxetanes as the cationic part of the formulation and acrylate resins such as urethane acrylate, epoxy acrylate, polyester acrylate resins, and acrylate monomers as the radical part of the formulation allows to obtain interpenetrated polymeric networks (IPN) or hybrid polymeric networks (HPN) able to be cured by a sustained and controllable frontal polymerization can be obtained.

Preferably, said composition further comprises a monomer. More preferably, said monomer is selected from the group consisting of a monomer containing an epoxy reactive group, an oxetane reactive group, a monomer containing an acrylate reactive group, a monomer containing an epoxy reactive group and an acrylate reactive group, and a combination thereof.

In the context of the invention, a monomer is to be understood as reactive molecule, typically with a molecular weight within 100 and 500 Daltons, that can react with identical or different molecules to form a polymer. With the addition to the composition according to the invention of monomers with one or more functionalities, for example, with an epoxy reactive group, an oxetane reactive group, and/or acrylate reactive group, the obtained polymeric networks will be connected forming a hybrid polymeric network. Examples of monomers include epoxy methacrylate monomers, epoxy acrylate monomers, oxetane methacrylate monomers, oxetane acrylate monomers, polyester methacrylate monomers, and polyester acrylate monomers.

Preferably, said composition further comprises a radical photoinitiator. More preferably said radical photoinitiators is selected from the group consisting of benzoyl peroxide (BPO), Ethyl Phenyl(2,4,6-trimethylbenzoyl)phosphinate (TPO-L), and 2-lsopropyl thioxanthone (ITX), and a combination thereof.

Preferably, said composition further comprises a combination of an acrylate resin, a radical photoinitiator, and a radical thermal initiator. More preferably, said composition further comprises a monomer.

In a preferred embodiment, the composition according to the invention comprises
[a] a cycloaliphatic epoxy resin;
[b] a cationic photoinitiator;
[c] a thermal acid generator;
[d] a reaction front modulator agent for modulation the reaction front of the photopolymerization reaction, wherein said reaction front modulator agent is selected from the group consisting of a modified amino acid derivative, a polyol, an oxetane, and a combination thereof;
[e] an acrylate resin;
[f] a radical photoinitiator; and
[g] a radical thermal initiator.

Radical photoinitiators, such as BPO and TPO-L, can be used in combination with cationic photoinitiators as sensitizing agents thus improving the activation capacity of the composition according to the invention upon irradiation with UV light. For example, a combination of t-BPIPF6 + BPO/TPO-L or a combination of DDPI-SbF6 + BPO/TPO-L can be used.

Preferably, said thermal acid generator is a thermal acid generator of the onium salt type, more preferably said thermal acid generator is a hexafluoro antimoniate-based thermal acid generator. Thermal acid generator of the onium salt type, particularly hexafluoro antimoniate-based thermal acid generator are advantageous to provide and sustain a stable front reaction during the frontal polymerization of the composition.

Preferably, the concentration of said cationic photoinitiator is of at least 0.5%wt, preferably within the range from 0.5%wt to 15%wt, and more preferably within the range from 0.5%wt to 6%wt or 2%wt to 6%wt, and even more preferably within the range from 4%wt to 6%wt, with respect to the total weight of said composition.

Preferably, the concentration of said thermal acid generator is of at least 0.1%wt, preferably within the range from 0.1%wt to 7%wt, more preferably within the range from 0.2%wt to 5%wt, and even more preferably within the range from 0.4%wt to 1%wt or 0.5%wt to 0.8%wt, with respect to the total weight of said composition.

Preferably, the concentration of said oxetane is within the range from 10%wt to 30%wt with respect to the total weight of said composition.

Preferably, the concentration of said polyol is within the range from 1%wt to 50%wt, preferably within the range from 5%wt to 50%wt, more preferably within the range from 10%wt to 40%wt, even more preferably within the range from 20%wt to 30%wt, with respect to the total weight of said composition.

Preferably, the concentration of said polymer-based amino acid derivative is within the range from 0.1% to 5%wt, preferably within the range from 0.5%wt to 3%wt, and more preferably within the range from 1%wt to 2%wt, with respect to the total weight of said composition.

Preferably, the invention refers to a method to adhere a first substrate and a second substrate to each other, wherein said method comprises the steps of applying a thin layer of a composition according to the invention to one of said first or second substrates.

Preferably, the invention refers to a method for manufacturing a composite material, preferably wherein said composite material is a fibre -based composite material comprising a plurality of fibres embedded in a polymer-based matrix, wherein said polymer-based matrix comprises a composition according to the invention and wherein said plurality of fibres are glass or carbon fibres such that said fibre-based composite material obtained is respectively a glass fibre or a carbon fibre composite material.

The above-mentioned preferred features with reference to the composition according to the invention also applied independently to other objects of the invention. Thus, they are to be understood as applying to the any uses according to the invention, particularly to use of a stabilizing agent according to the invention for controlling the photopolymerization reaction of photopolymerizable compositions, and for the manufacture of composite materials, as well as to the methods according to the inventions defined above.

### Brief description of the drawings

Further advantages and features of the invention will become apparent from the following description, in which, without any limiting character, preferred embodiments of the invention are disclosed, with reference to the accompanying drawings in which:
Figure 1 shows the results of the DSC characterization of the activation capacity and the reactivity of the embodiments of the composition according to the invention described in Example 1.
Figure 2 shows the results of the DMA characterization of the viscoelastic thermodynamic properties of the embodiments of the composition according to the invention described in Example 2.
Figures 3 and 4 shows the results of the characterization of the front polymerization reaction for the embodiments of the composition according to the invention described in Example 3.
Figure 5 shows the results of the characterization of the front polymerization reaction for the embodiments of the composition according to the invention described in Example 5.
Figure 6 shows the results of the characterization of the front polymerization reaction for the embodiments of the composition according to the invention described in Example 6.
Figure 7 shows the results of the characterization of the front polymerization reaction for the embodiments of the composition according to the invention described in Example 7.
Figure 8 shows pictures of examples of successful bonding achieved with the composition according to the invention in various substrates, including non-thermally conductive substrates such as polycarbonate (PC) (Fig 10 A), wood (Fig 10 B), and ABS (Fig 10 C), and thermally conductive substrates such as carbon fibre composite (Fig 10 D), stainless-stell (Fig 10 E), and steel (Fig 10 F), as described in Example 9.
Figure 9 and shows in panel A the results of the characterization of the adhesion strength (Lap Shear Strength) of examples of successful bonding achieved with the composition according to the invention in various substrates, including wood, ABS, polycarbonate (PC), aluminium (Al) and stainless steel (SS) as described in Example 9. Panel B shows an image of examples of the samples after the adhesion test was performed to show the presence or absence of reaction channels on the cured adhesive allowing the visual evaluation of the frontal polymerization reaction.
Figure 10 shows an image of an exemplary sample of stainless-steel after the adhesion test was performed to show the presence of reaction channels on the cured adhesive allowing the visual evaluation of the frontal polymerization reaction, as described in Example 9.
Figure 11 shows in panel A the results of the characterization of the mechanical properties of a sample of a carbon fibre composite material obtained as described in Example 10. Panel B shows an image of the testing setup used as described in Example 10.

### Detailed description of embodiments of the invention

### Exemplary materials and methods

The following are exemplary materials and methods that can be used to manufacture and to characterise the different embodiments of the composition according to the invention, some of which are described without implying any limitation thereto in the Examples further below.

### Examples of bulk resins:

| **Abbreviation/ Reference** | **Compound** | **CAS N°** |
|---|---|---|
| CE S105 | 3,4-Epoxycyclohexylmethyl-3',4'-epoxycyclohexane carboxylate (ECC) | 2386-87-0 |
| CE S128 | Bis(3,4-epoxycyclohexyl)methyl)adipate | 3130-19-6 |
| CE 1510 | Hydrogenated Bisphenol A | 30583-72-3 |
| BADGE | Bisphenol A diglycidyl ether | 25068-38-6 |

### Examples of oxetanes:

| **Abbreviation/ Reference** | **Compound** | **CAS N°** |
|---|---|---|
| TMPO | 3-Ethyloxetan-3-methanol | 3047-32-3 |
| Di-TMPO | Bis(3-Ethyl-3-Oxetanylmethy) Ether | 18934-00-4 |

### Examples of acrylate resins:

| **Abbreviation/ Reference** | **Compound** | **CAS N°** |
|---|---|---|
| BAEDA | Bisphenol A Epoxy Diacrylate | 89297-97-2 |
| BHPPECA | 2,2-Bis (4-hydroxyphenyl)propane-epichlorohydrin copolymer acrylate | 55818-57-0 |
| UA | Aliphatic Urethane Acrylate | N.D.* |

| | | |
|---|---|---|
| *Not disclosed | | |

### Examples of acrylate monomers

| **Abbreviation/ Reference** | **Compound** | **CAS N°** |
|---|---|---|
| EMMOX | 3-Ethyl-3-(Methacryloyloxy)Methyloxetane | 37674-57-0 |
| HDDA | Hexane-1,6-diol diacrylate | 13048-33-5 |
| THFA | Tetrahydrofurfuryl acrylate | 2399-48-6 |
| IBOA | Isobornyl acrylate | 5888-33-5 |

### Examples of polyols:

| **Abbreviation/ Reference** | **Compound** | **CAS N°** |
|---|---|---|
| PG | Commercially available polyester glycol | N/A |
| DG | Diethylene glycol; 2,2'-oxydiethanol | 111-46-6 |
| PEG200-PEG2000 | Polyethylene glycol with molecular weight of 200 to 2000 g/mol | N/A |

### Examples of modified amino acids derivatives:

| **Abbreviation/ Reference** | **Compound** | **CAS N°** |
|---|---|---|
| C6 K | PBAE-modified Cysteine-Trilysine | N/A |
| C6 H | PBAE-modified Cysteine-Trihistidine | N/A |
| ASD1 | Acylated Serine-derivative | N/A |
| DDOH S | N-Dodecanoyl-Serine | 14379-56-7 |
| TDOH S | N-Tetradecanoyl-Serine | 21394-57-0 |

### Examples of cationic photo initiators:

| **Abbreviation/ Reference** | **Compound** | **CAS N°** |
|---|---|---|
| lodonium salts | | |
| t-BPIPF6 | Bis-(4-t-butyphenyl)-iodonium hexafluorophosphate | 61358-25-6 |
| DDPI-SbF6 | Bis-(4-t-dodecylphenyl)iodonium hexafluoroantimonate | 71786-70-4 |
| - | 4-isopropyl-4'-methyldiphenyliodonium tetrakis (pentafluorophenyl)borate | 178233-72-2 |

| Sulfonium salts | | |
|---|---|---|
| Bis-SbF6 | (sulfanediylbenxene-4,1-diyl)bis(diphenylsulfonium)bis(hexafluoroantimonate) | 74227-34-2 |

### Examples of radical thermal initiators:

| **Abbreviation/ Reference** | **Compound** | **CAS N°** |
|---|---|---|
| MIKP | Methyl Isobutyl Ketone Peroxide | 37206-20-5 |
| ADMVN | 2,2'-Azobis[2,4-dimethylvaleronitrile] | 4419-11-8 |

### Examples of radical photo initiators / sensitizing agents:

| **Abbreviation/ Reference** | **Compound** | **CAS N°** |
|---|---|---|
| TPO-L | Ethyl mesitylcarbonyl(phenyl)phosphinate | 84434-11-7 |
| BPO | Benzoyl peroxide | 94-36-0 |
| ITX | 2-isopropylthioxanthone | 5495-84-1 |

### Examples of Thermal Acid Generators (TAG):

| **Abbreviation/ Reference** | **Compound** | **Formula** |
|---|---|---|
| OS-TAG-1 | phenyldialkyl sulfonium salt 1 | 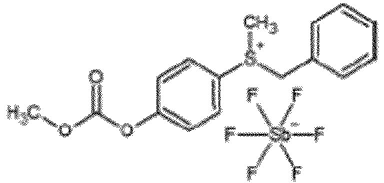 |
| OS-TAG-2 | phenyldialkyl sulfonium salt 2 | 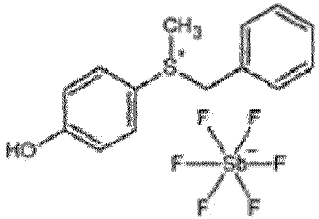 |
| OS-TAG-3 | phenyldialkyl sulfonium salt 2 | 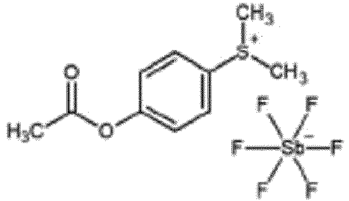 |
| OS-TAG-4 | Antimony hexafluoride-based onium salt | N.D. |

### Methods

### Preparation of tested formulations and curing conditions

For all examples, each composition to be tested was prepared at a constant total mass of 1g by mixing the respective components and homogenising them using a Speedmixer at 3000 rpm for 1 minute.

Each obtained compositions were cast into a rectangular silicone mould measuring 50mm in length and 4mm in width.

Curing was carried out using a UV-LED Imap (AloneFire SV13, 15W) with a peak emission at 365 nm and an irradiance of 0.26 W/cm². The lamp was positioned 2 cm above the sample surface and samples were irradiated at one edge of the rectangular mould for 10 seconds at am ambient temperature of 25°C.

### Front Propagation Velocity (FPV) and Maximum Reaction Front Temperature (MRFT) determination.

Front temperature was monitored using a thermal imaging camera. Front Propagation Velocity (FPV) and front temperature profile were recorded using a standard video camera.

### Viscoelastic Properties and Glass Transition Temperature determination using Dynamic Mechanical Analysis

Glass Transition Temperature (Tg) of cured samples were carried out using dynamic mechanical analysis (DMA Q800 V21.2 TA) under a temperature ramp of 3°C/min at 1Hz frequency and 10 µm of amplitude using a dual-cantilever clamp. Samples (size: 50mm, 14mm, 5 mm) were cured in a silicone mould under UV-LED light. To determine the lineal viscoelastic region and the amplitude for the assay, a strain sweep was performed at 1Hz from 10 to 1000 µm amplitude.

### Testing adhesion properties of the compositions

Adhesion assays were performed according to the EN 2243-1 standard using a Zwicj/Roell Z030 universal testing machine (30kN) equipped with mechanical grips.

Adhesive lap joined samples were prepared using different types of substrates, including wood, ABS, and polycarbonate (PC) (100 mm x 25 mm x 4mm) and stainless steel and aluminium plates (100 mm x 25 mm x 1.5 mm).

Prior to bonding, the surface of the substrate was cleaned with isopropanol. For metal substrates a pre-heating step was performed. The composition according to the invention to be tested was applied as a uniform layer of approximately 1 mm thickness.

Polymerisation was started under UV-LED light for 20 seconds thus triggering a frontal polymerisation (FP) of the composition.

Adhesion assays were performed at a crosshead speed of 2800 N/min at 25°C. The maximum lap shear strength (MPa) was calculated by diving the maximum load recorded by the bonded area of the joint using Zwick/Roell proprietary software.

### Example 1

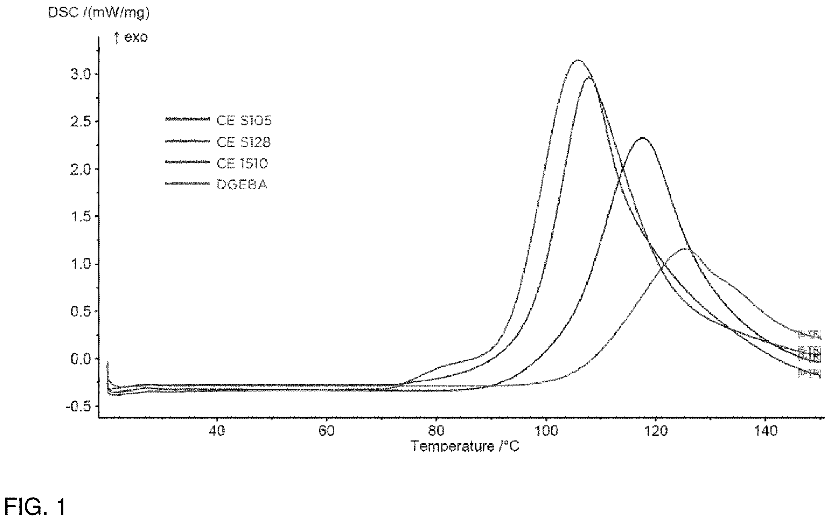

A number of exemplary compositions were tested with varying the type of bulk resin used and the amount of thermal acid generator used as detailed in Table 1 below. The reaction Front Propagation Velocity (FPV), the Maximum Reaction Front Temperature (MRFT), and the outcome of the frontal polymerization (FP) were evaluated. Activation and reactivity of each composition were also characterized by Differential scanning calorimetry (DSC) as shown in Figure 1.

**Table 1**

| **Resin Type** | **TMPO** (wt%) | **Bis-SbF6** (wt%) | **TAG** (wt%) | **FPV** (mm/s) | **RFT** (°C) | **FP** |
|---|---|---|---|---|---|---|
| BADGE | 20 | 6 | 1.5 | 0.68 | 135 | Front halted |
| | | | 5 | 1.04 | 244 | Completed |
| CE 1510 | 20 | 6 | 1.5 | 1.30 | 262 | Completed |
| | | | 5 | 1.91 | 276 | Completed |
| CE S128 | 20 | 6 | 1.5 | 1.74 | 278 | Completed |
| | | | 5 | 2.08 | 260 | Completed |
| CE S105 | 20 | 6 | 1.5 | 2.60 | 280 | Completed |
| | | | 5 | 2.75 | 293 | Carbonized |

A complete frontal polymerisation of the sample was achieved for each of the tested bulk cycloaliphatic epoxy resins in combination with TMPO as stabilizing agent, Bis-SbF6 as cationic photoinitiator, and commercially available as thermal acid generator (TAG) for the two tested amounts of TAG. BADGE was used as control and required a larger amount of TAG to obtain a complete front polymerization reaction. Increasing the amount of TAG resulted in an increase of the front propagation velocity in the formulations with the different cycloaliphatic resins, with a saturation effect being observed for more reactive resins such as CE S105 if too much TAG was used.

### Example 2

A Taguchi L27 three factors with 3 levels DoE was performed to study the effect of the different components with an embodiment of the composition according to the invention including CE S105 as bulk resin. The three defined factors were the concentration of TMPO as the oxetane, the concentration of Bis-SbF6 as cationic photoinitiator, and the concentration of a commercially available antimony hexafluoride-based TAG as thermal acid generator. The experimental domain wherein the levels of each factor were chosen and the hypothesized function of each component tested as factor were as detailed in Table 2 below.

For each tested formulation, the reaction Front Propagation Velocity (FPV), the Maximum Reaction Front Temperature (MRFT), and the outcome of the frontal polymerization (FP) were evaluated.

Viscoelastic properties and glass transition temperature (Tg) were also determined by DMA analysis for each composition.

**Table 2**

| Factor | Hypothesized function | Experimental Domain (wt%) |
|---|---|---|
| A: TAG | Generates acid to initiate and sustain the front chain reaction | 0.4 to 0.8 |
| B: TMPO | Accelerates the rate of dark curing and enhances front propagation | 10 to 40 |
| C: Bis-SbF6 | Initiates cationic polymerisation upon UV irradiation | 2 to 6 |
| D: Stabilizer | Stabilizes the polymerization reaction and improves the system shelf life by preventing premature activation | 1.5 |

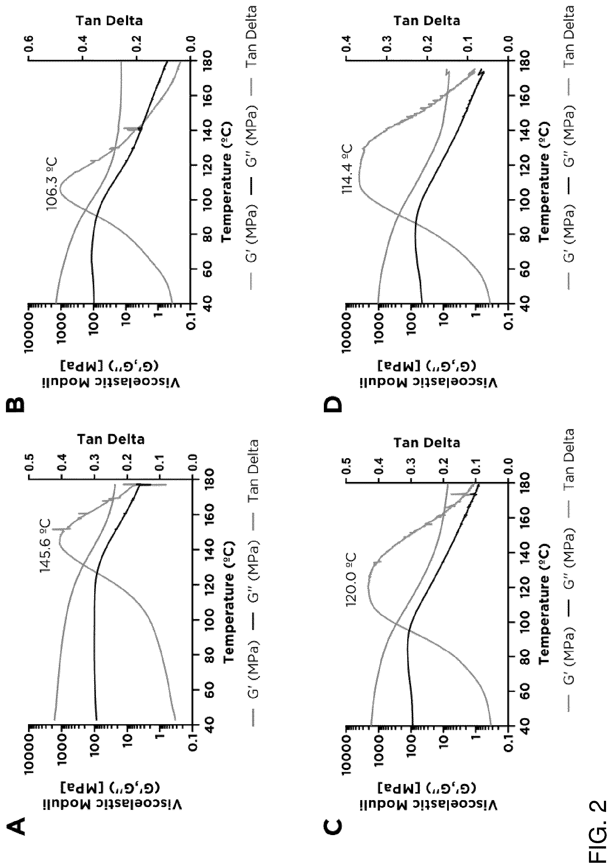

Table 3 shows the composition and the characterization results of the frontal polymerisation of 4 exemplary compositions of the 27 compositions obtained and tested during by the above-described DoE. Figure 2 shows the results of the DMA analysis of the viscoelastic properties and Tg determination for these exemplary compositions.

With the composition according to the invention, Tg within the range from 80°C to 160°C. Preferably, Tg within the range from 120°C to 150°C were obtained. This values a surprisingly high for a curing system at room temperature (25°C). It is known to attain these temperatures for thermal curing using ovens. Thus, the composition according to the invention allows to implement thermal curing at room temperature without the need of any equipment, thus allowing a broader range of applications than known formulations.

**Table 3**

| **Formula** | **TAG** (wt%) | **TMPO** (wt%) | **Bis-SbF6** (wt%) | **V_{F}** (mm/s) | **T_{F}** (°C) |
|---|---|---|---|---|---|
| AFS 1002 | 0.5 | 10 | 4 | 1.08 | 256 |
| AFS 1006 | 0.5 | 25 | 6 | 1.32 | 244 |
| AFS 1014 | 0.6 | 25 | 4 | 1.76 | 271 |
| AFS 1022 | 0.7. | 25 | 2 | 2.10 | 273 |

These results show that by adjusting the concentration of oxetane (i.e. TMPO), TAG, and cationic photo initiator (i.e. Bis-SbF6) the base formulation can be adjusted in terms of the Front Propagation Velocity (FPV) and its exothermicity (T_{F}). The addition of the oxetane further improves the reactivity of the composition even with less amount of photo initiator.

Other examples of formulations including only CE S105 were obtained, and successful frontal polymerization was achieved as showed in Table 4 below. Formulations using as bulk resin only TMPO were tested as controls. Frontal polymerization was obtained in these samples but was not controllable, with bubbling and change of colour being observed during the polymerization reaction.

**Table 4**

| **Formula** | **CE S105** | **TMPO** | **TAG** (wt%) | **Bis-SbF6** (wt%) | **FP** |
|---|---|---|---|---|---|
| AFS 1002-CE | 100 | 0 | 0.5 | 4 | Completed |
| AFS 1002-TMPO | 0 | 100 | 0.5 | 4 | Not completed |
| AFS 1022-CE | 100 | 0 | 0.7 | 2 | Completed |
| AFS 1022-TMPO | 0 | 100 | 0.7 | 2 | Not completed |

### Example 3

The effect of adding fillers to the compositions according to the invention was evaluated. Two types of fillers were tested: thermally conductive fillers such as aluminium oxide (Al₂O₂) or Boron nitride (BN) and non-thermally conductive fillers such as pyrogenic silica. Thermally conductive and non-thermally conductive fillers differ in their thermal conductivity and allow to adjust the heat dissipation capacity of the composition thus making it adaptable to various applications without compromising its performance.

Fillers were added to the base formulation at a concentration below 20% by weight, preferably below 15% by weight.

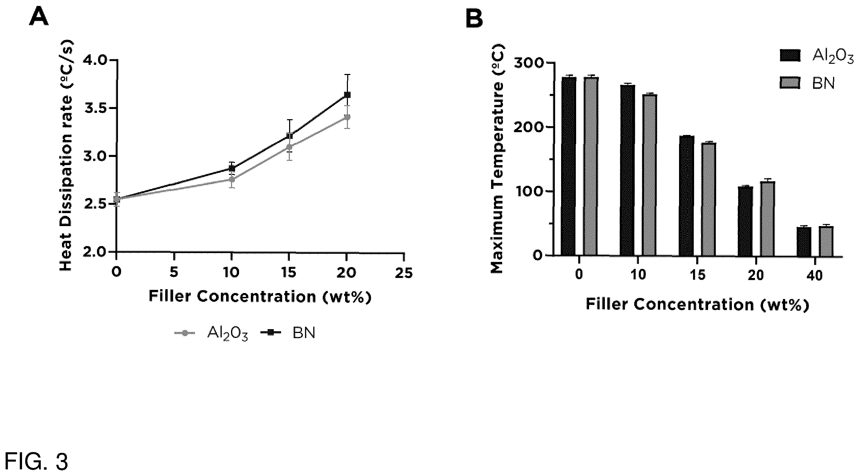

Figure 3 shows the effect of adding independently Al₂O₂ or BN as examples of thermally conductive fillers to a base formulation with formula AFS 1002 as described above.

In both cases, increasing the concentration of the added thermally conductive filler resulted in an increase in the Heat Dissipation rate of the formulation and a decrease of the Maximum Reaction Front Temperature (MRFT) obtained during the frontal photopolymerization.

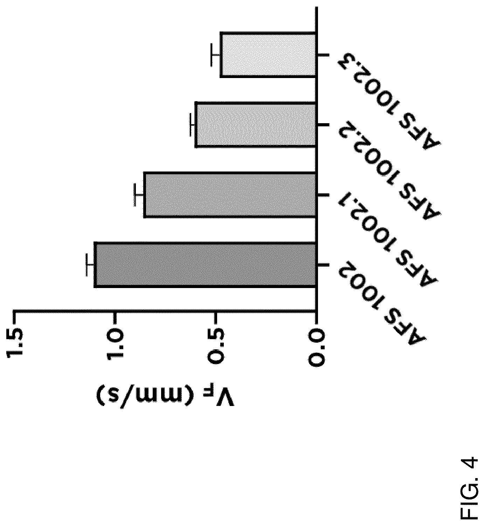

Figure 4 shows the effect of adding pyrogenic silica as non-thermally conductive filler at concentrations ranging from 2% to 10% in weight to a base formulation with formula AFS 1002 as described above.

Increasing the concentration of added non-thermally conductive filler resulted in an increase in a decrease of the Reaction Front velocity.

These examples show how thermally conductive and non-thermally conductive fillers can be added to the compositions according to the invention to modulate the progression of the polymerization front and adapt it to the needs of each application.

Applications where the tuneability of the composition according to the invention is particularly advantageous, are for example, in their use as adhesives or in their use for the manufacture of composite materials, such as the ones described in Example 7 and 8. In these applications, depending on the nature of the substrates to be treated, the composition according to the invention can be adapted using the above described fillers to ensure the required polymerisation and thermodynamical properties are met. In these applications, the possibility to maintain a frontal polymerization behaviour while allowing for this tuneability is particularly advantageous as it allows to use the composition as adhesive in challenging applications, such as a thin film adhesive or to be used to generate particularly thin composite materials, for example carbon fibre composites.

Also, particularly in adhesive applications, the nature of the substrate, particularly their thermal conductivity, can greatly influence the degree of polymerisation of the compositions used as adhesives and negatively affect the strength of adhesion that can be obtained. The compositions according to the invention provide a suitable base formulation that can be tuned and adapted to different substrates allowing to overcome this problem.

### Example 4

A number of compositions were tested with varying the type of bulk resin used and the amount of thermal acid generator as in Example 1 but including a commercially available acylated amino acid derivative (ASD1) as stabilizing agent, as shown in Table 5 below.

While the structure and chemical formula of the commercially available polymer-based amino acid derivative used in this example was not available, LC-MS/MS QTOF characterisation of the ASD1 identified it as alkyl derivative of the amino acid Serine (data not shown).

The addition of the acylated amino acid derivative acted as a stabilizing agent blocking the progression of the front in some of the tested cases. An inverse correlation between the stabilizing effect of the acylated amino acid derivative and the activation and reactivity of the composition as per the evaluation shown in Example 1 was observed.

**Table 5**

| **Resin Type** | **TMPO** (wt%) | **Bis-SbF6** (wt%) | **TAG** (wt%) | **ASD1** (wt%) | **FP** |
|---|---|---|---|---|---|
| BADGE | 20 | 6 | 3 | 3 | Front halted |
| | | | 5 | | Front halted |
| CE 1510 | 20 | 6 | 1.5 | 3 | Front halted |
| | | | 3 | | Completed |
| CE S128 | 20 | 6 | 1 | 3 | Completed |
| | | | 1.5 | | Completed |
| CE S105 | 20 | 6 | 1 | 3 | Completed |
| | | | 1.5 | | Carbonized |

Other examples of modified acid derivatives based on poly(beta-amino)ester (PBAE) modified amino acid derivatives were tested with equivalent stabilizing effects as shown in the example below.

### Example 5

The stabilizing effect of adding a modified amino acid derivative to the composition according to the invention was further characterised by testing two polymer-modified oligopeptide derivates based on poly(beta-amino)esters (PBAE-modified amino acid derivatives): a PBAE-modified Cysteine-Trihistidine derivative (C6 H) and a PBAE-modified Cysteine-Trilysine derivative (C6-K).

Two different concentrations of each PBAE-modified oligopeptide derivative, 0.1%wt and 0.5%wt, were tested by adding them individually to a base formulation containing a ECC cycloaliphatic epoxy resin with 10%wt TMPO, 2%wt Bis-SbF6, and 0.6% of the commercially available antimony hexafluoride-based onium salt.

The corresponding oligopeptides without the PBAE modification, wherein K Peptide corresponds to a trilysine oligopeptide, and H Peptide corresponds to a trihistidine oligopeptide, were also tested and used as controls.

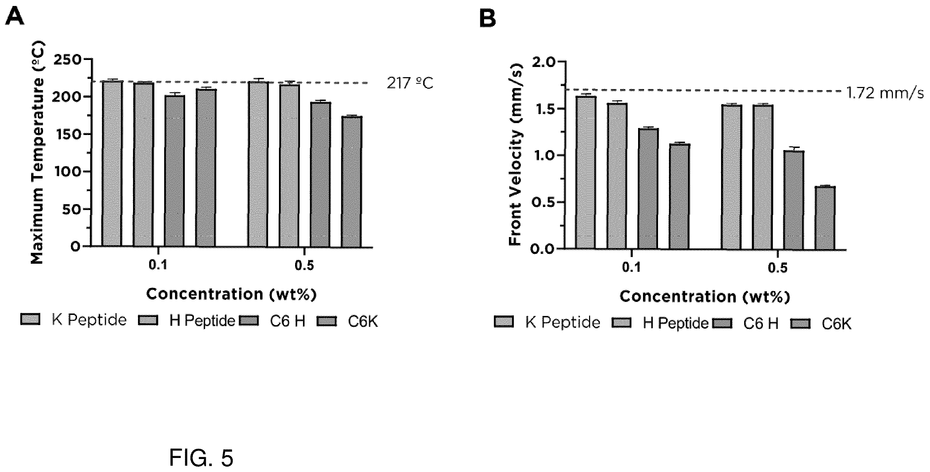

Figure 5 shows the results obtained for the characterisation of the frontal polymerization reaction of the tested formulations. The Maximum Reaction Front Temperature (MRFT) and the Front Propagation Velocity (FPV) were determined for each formulation. The columns show, for each concentration from left to right, the results obtained for the base formulation with K peptide, the base formulation with H peptide, the base formulation with the C6 H derivative and the base formulation with the C6 H derivative. The dashed line indicated the obtained value for the base formulation without polymer-based amino derivative.

The addition of amino acid oligopeptides without the PBAE modification did not have a significant effect to the Maximum Reaction Front Temperature (MRFT) and the Front Propagation Velocity (FPV) when compared with the base formulation with stabilizing agent (dashed line threshold).

Surprisingly, the addition of PBAE-based oligopeptide derivative, both in the case of a Trihistidine derivative (C6 H) and the Trihlysine derivative (C6 K), resulted in a decrease of both the Maximum Reaction Front Temperature (MRFT) and the Front Propagation Velocity (FPV) of the composition when compared with the base formulation (dashed line threshold) in a concentration dependent manner and with different magnitudes depending on the oligopeptide used.

Examples 3 and 4 demonstrate how modified amino acid derivatives can be used to tailor the properties of the composition according to the invention thus allowing to control the frontal polymerization reaction and the properties of the final cured composition.

### Example 6

The use of polyols as alternative or complementary stabilizing agents was tested by generating further embodiments of the compositions according to the invention using a base formulation containing a ECC cycloaliphatic epoxy resin with 10%wt TMPO, 2%wt Bis-SbF6, and 0.6% of the commercially available antimony hexafluoride-based onium salt, and adding a polyol alone at different concentrations (20 %wt and 40% wt), or in combination with any of the previously tested polymer-based amino acid derivatives.

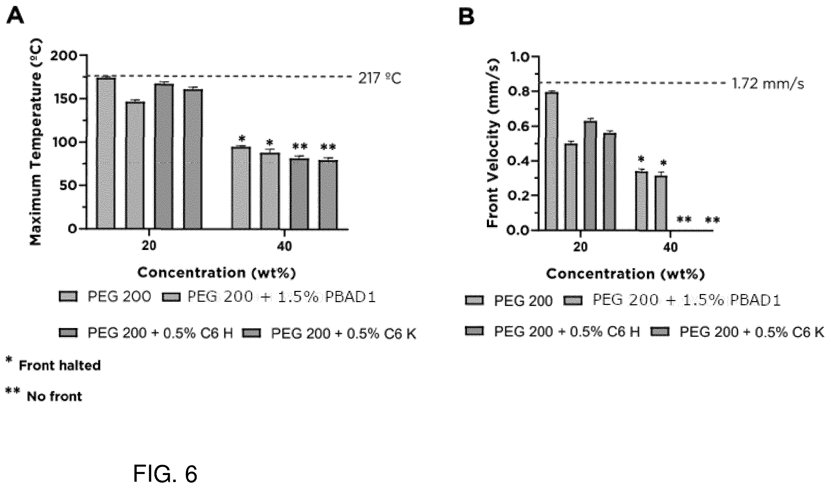

Figure 6 shows the results obtained for the characterisation of the frontal polymerization reaction of these tested formulations. The Maximum Reaction Front Temperature (MRFT) and the Front Propagation Velocity (FPV) were determined. The columns show for each concentration from left to right the results obtained for the base formulation with PEG 200, the base formulation with PEG 200 + 1.5%wt of ASD1, the base formulation with PEG 200 + 0.5%wt of C6 H, and the base formulation with PEG 200 + 0.5%wt of C6 K. The dashed line indicated the obtained value for the base formulation without stabilizing agents.

Further tests were performed with other polyols, for example a commercially available polyester diol at concentration ranging from 5 %wt to 50 %wt, preferably from 20%wt to 30%wt, obtaining similar results as above (data not shown). Alone the polyester diol improved the front polymerisation properties of the base composition and allowed to tailor the front polymerisation reaction and in combination with an acylated amino acid derivative a further improved control of the frontal polymerization reaction was be achieved.

### Example 7

Besides sulfonium salts as cationic photoinitiator, the use of iodonium salts was also tested.

For example, t-BPIPF6 and DDPI-SbF6 as cationic photo initiators were tested in several formulations and compared with the same formulation with SbF6.

Using different photo initiators allows to obtain composition according to the invention that can be photopolymerised using light at different wavelength, such as for example 365 nm for SbF6, 395 nm or 400 nm with t-BPIPF6 and DDPI-SbF6.

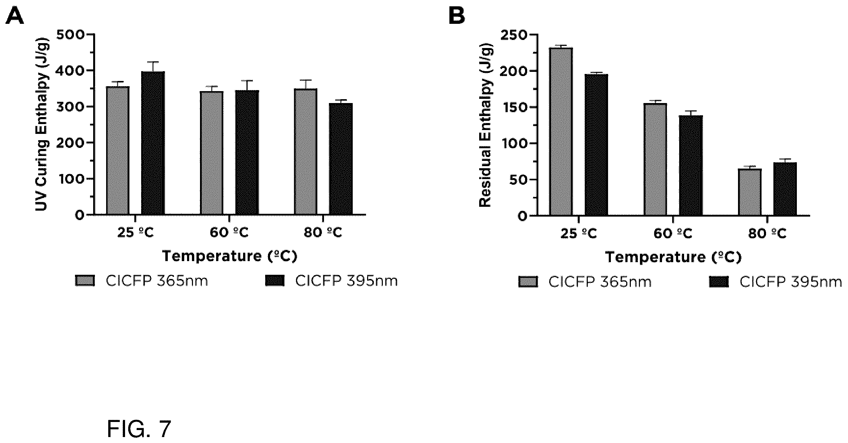

Figure 7 shows an example of how independently of the cationic photoinitiator used, the thermodynamic properties determined by photo-DSC analysis of the tested compositions were conserved. The UV curing enthalpy at different isothermal temperatures and the residual curing enthalpy to verify the degree of conversion following photo-DSC were determined and no significant differences were found between a composition curable at 365 nm and a composition curable at 395 nm.

The use of sensitizing agents such as TPO-L or BPO or a combination of both allows the use of different excitation wavelengths such as 365 nm and 395 nm to initiate the frontal photopolymerization reaction when using when using iodonium salts as photo initiators. This makes the compositions according to the invention more versatile in terms of what light is needed to cure them without affecting its performance or its polymerization properties.

Examples of these other embodiments of the composition according to the invention that have been tested using different cationic photo initiators are detailed in Tables 6 and 7 below.

**Table 6**

| **Component** | **CICFP_395_i1** | **CICFP_395_i3** | **CICFP_395_i4** | **CICFP_395_i7** |
|---|---|---|---|---|
| | **%wt** | **%wt** | **%wt** | **%wt** |
| CE S105 | 55 | 51 | 48 | 49.50 |
| TMPO | 40 | 40 | 40 | 40 |
| Polyester diol | | | | |
| TAG | 1 | 1 | 1 | 1.5 |
| ASD1 | | | | |
| Bis-SbF6 | 2 | | | |
| T-BPIPF6 | | | | 6 |
| DDPI-SbF6 | | 6 | 6 | |
| Pyrogenic silica | | | | |
| BYK-P 9920 | | | | |
| TPO-L + BPO | 2 | 5 | 5 | |
| BPO | | | | 3 |

**Table 7**

| **Component** | **CICFP_395_i9** | **CICFP_395_i16** | **CICFP_395_i17** |
|---|---|---|---|
| | **%wt** | **%wt** | **%wt** |
| CE S105 | 53 | 60 | 87 |
| TMPO | 40 | 20 | |
| Polyester diol | | 6 | |
| ASD1 | | 1 | 1 |
| TAG | 2 | 3 | 3 |
| Bis-SbF6 | | | |
| T-BPIPF6 | 2 | 2 | 2 |
| DDPI-SbF6 | | | |
| Pyrogenic silica | | 2 | 1 |
| BYK-P 9920 | | 3 | 3 |
| TPO-L + BPO | | | |
| BPO | 3 | 3 | 3 |

### Example 8

The use of a combination of aromatic resins such as BADGE with cycloaliphatic resins such as CE S105 as bulk resin was also tested. For example, the following formulations of the composition according to the invention showed in Tables 8 and 9 were obtained. A base formulation according to the invention including a mixture of CE S105 and BADGE was further modified with TMPO, ASD1 as stabilizing agents and Fumed silica as filler. Similar effects of the stabilizing agents and the filler were observed in comparison with formulations based on cycloaliphatic resins alone. The formulation combining cycloaliphatic resins with aromatics resins also showed improved tuneability in comparison with formulations containing only BADGE.

**Table 8**

| **Component** | **%wt** |
|---|---|
| CE S105 | 38.0% |
| TMPO | 20.0% |
| BADGE | 30.0% |
| Bis-SbF6 | 6.0% |
| TAG | 0.5% |
| ASD1 | 0.5% |
| BYK 1740 | 1.0% |
| Glymo | 2.0% |
| Fumed silica | 2.0% |

**Table 9**

| **Component** | **%wt** |
|---|---|
| CE S105 | 40 |
| TMPO | 20.0% |
| BADGE | 33.0% |
| Bis-SbF6 | 6.0% |
| TAG | 0.7% |
| ASD1 | 0.3% |

### Example 9

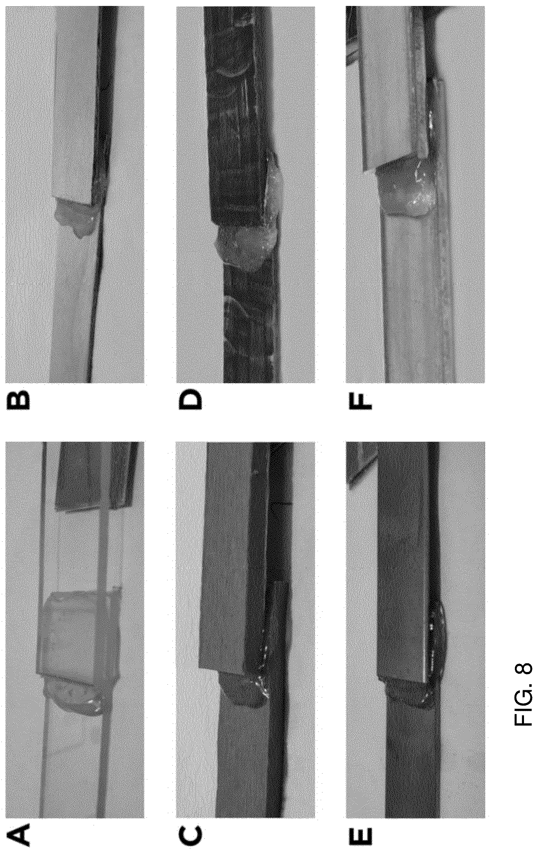

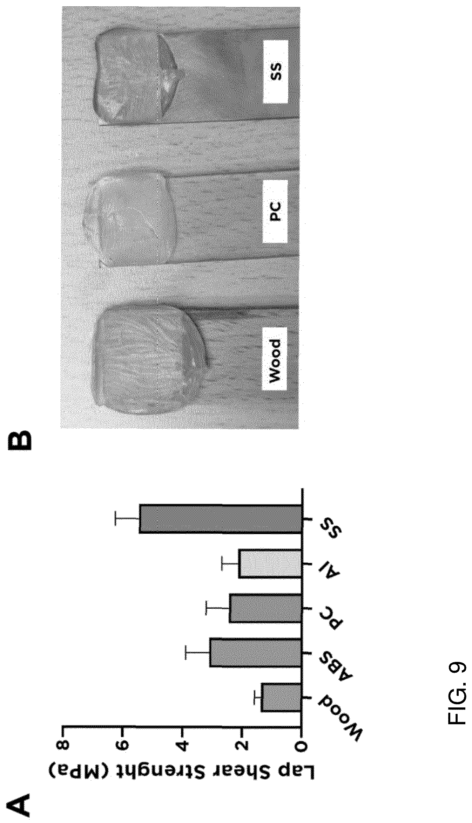

The use of the compositions according to the invention as adhesive was validated on different substrates as explained above and as showed in Figures 8 and 9.

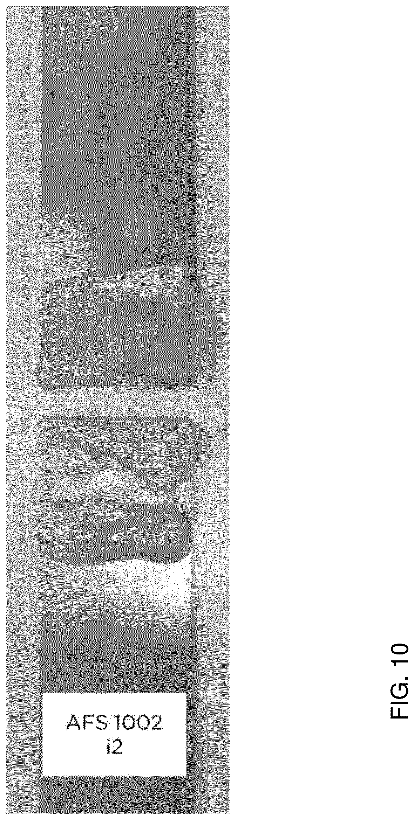

Figure 8 shows further examples of successful bonding achieved with the composition according to the invention in various substrates, including non-thermally conductive substrates such as polycarbonate (PC) (Fig 10 A), wood (Fig 10 B), and ABS (Fig 10 C), and thermally conductive substrates such as carbon fibre composite (Fig 10 D), stainless-stell (Fig 10 E), and steel (Fig 10 F).

Figure 9 shows an exemplary set of results of the validation of the use of a base formulation according to the invention on different substrates.

The same base formulation was used to test adhesion to different substrates including wood, ABS, polycarbonate (PC), Aluminium (Al) and Stainless steel (SS). In this example, a more reactive formulation tailored for conductive substrates, particularly to stainless-steel. The used formulation also contained pyrogenic silica to compensate the elevated heat dissipation rate related to the target substrate.

As shown in panel A of Figure 9, adhesion is achieved on the different substrates with Lap Shear Strength (LSS) values between 1 and 6 MPa. Different adhesion strengths were obtained among the different substrates, with the maximum adhesion strength (maximum LSS) being obtained for the target substrate Stainless-steel.

Panel B of Figure 9 show the results of the adhesion strength test after the failure point has been reached. Visual inspection of the sample allowed to observe reaction channels through the adhesion area on the samples corresponding to the non-thermally conductive substrates wood and PC.

The results obtained in the other substrates demonstrate how the nature of the substrate affects the adhesion strengths that can be obtained, and how adhesion strength can correlate with the substrate thermal conductivity, which affects the adhesive properties that can be obtained with a particular composition.

In the example sowed in Figure 9, as more reactive formulation tailored for conductive substrates, particularly to stainless-stell, was used, a lower adhesion strength was obtained on less thermally conductive such as ABS, PC, and wood. While the higher thermal conductivity of aluminium does not align with the lower adhesion strength, it shows that the composition must be tailored for each specific substrate to obtain maximum adhesion.

Other examples of compositions according to the invention were tested and showed that less reactive formulations, that generate less heat, and that can be used to bond non-conductive substrates having lower heat dissipation capacity, as such as wood, but also that more reactive formulas can be modified by using thermally conductive fillers to increase their dissipation of heat capacity thus allows to compensate the excess heat produced by the formulation that cannot be dissipate by the substrate, thus allow their use with non-conductive substrates.

Also, for example, less reactive formulations according to the invention, which generate less heat, can be modified by using thermally conductive fillers to decrease their dissipation of heat capacity to compensate the heat dispersion capacity of the substrate, thus allowing them to be tailored to be used with thermally conductive substrates such as metallic substrates, like aluminium and stainless steel. An example of a sample of stainless steel bonded with such a less reactive composition according to the invention is showed in Figure 10.

In general terms, for adhesion applications, lower front progression velocities are desirable to obtain optimal adhesion properties. This is to allow the polymer network to form properly and with minimal defects, thus conferring improved mechanical properties and adhesion strength to the cured composition. However, too low front progression velocities resulting from incomplete polymerisation reactions cause halting of the polymerisation front, and thus incomplete curing along the target adhesion area.

Optimal adhesion properties are thus achieved by striking an optimal balance between the reactivity and thermal properties of the composition that needs to also be taking into account the properties of the substrate, particularly in terms of thermal conductivity, and the requirements of the specific adhesive application (amount of composition and thickness of the layer to be applied) as mass is also a critical factor affecting the polymerisation rate and ability of the polymerisation front to propagate.

These results demonstrate that the composition according to the invention provides an advantageous base formulation that can be fined tune fine-tuned in terms of its polymerization properties, such as activation capacity and reactivity, but also in terms of its thermal properties, thus as exothermicity and heat dissipation capacity, so as to be adaptable to be used in adhesive application across a range of different substrates, while benefiting from the advantages of being used in low amount, thin layers, and of being curable by a frontal photopolymerization, which make it particularly advantageous for challenging application.

### Example 10

To further validate the use of the compositions according to the invention for the manufacture of carbon fibre composites, a pultrusion process using the compositions according to the invention was established. This allowed the obtention of carbon fibre composite specimens comprising carbon fibres impregnated with the composition according to the invention.

To test the mechanical properties of the specimens of carbon fibre composite material obtained, the following methodology was used.

The flexural modulus was determined by three-point bending tests following ASTM D790. Specimens having dimensions of 200 mm x 10 mm x 2 mm were prepared by said pultrusion process and cured with an 8 and 12 W/cm² power UV-LED lamp with emission peak at 395 nm. The assays were performed according to the ASTM D790 Standard using a Zwick/Roell Z030 30 kN Universal Testing Machine at a crosshead speed of 2 mm/min. The span length between the supports as set to 64 mm. Tests were conducted at 25°C and the flexural stress-strain curve was obtained using Zwick/Roell software.

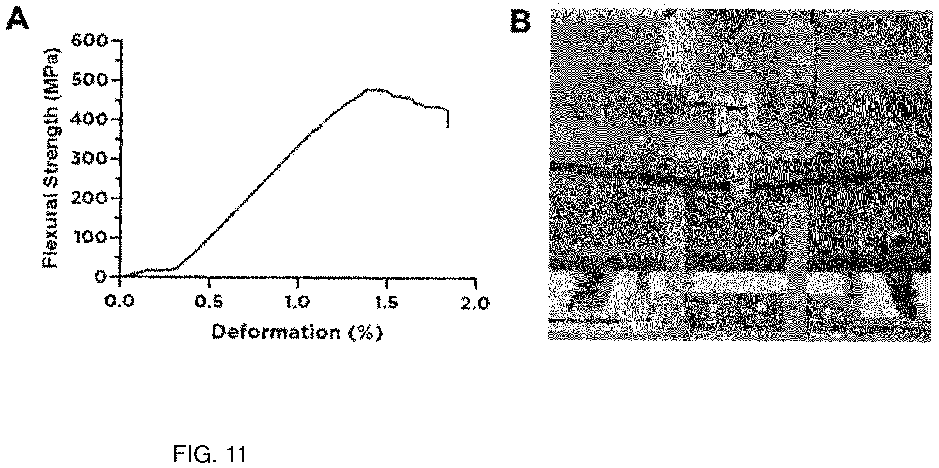

Figure 11 shows the results of such test performed on a carbon fibre composite cured with a composition according to the invention and demonstrates that said compositions allowed the obtention of carbon fibre composites by impregnation of the carbon fibres.

### Example 11

The possibility of formulating the composition according to the invention with acrylate resins to form interpenetrated polymeric networks (IPN) and hybrid polymeric networks (HPN) able to sustain a hybrid frontal polymerization reaction and be used, for example, for the above-described applications.

The following exemplary formulations were tested:

| **Component** | **HF i1** | **HF i2** | **HF i3** | **HF i4** |
|---|---|---|---|---|
| | **%wt** | **%wt** | **%wt** | **%wt** |
| CE S105 | 44.40 | 44.40 | 44.40 | 45.20 |
| BAEDA | 20.00 | | | 20.00 |
| UA | | 20.00 | 20.00 | |
| TMPO | 20.00 | 5.00 | | 20.00 |
| EMMOX | | 20.00 | 30.00 | |
| HDDA | 10.00 | 5.00 | | 10.00 |
| OS-TAG-4 | 0.80 | 0.80 | 0.80 | 1.00 |
| Bis-SbF6 | 2.00 | 2.00 | 2.00 | 2.00 |
| TPO-L | 1.00 | 1.00 | 1.00 | |
| 2,2'-Azobis[2,4-dimetilvaleronitrilo] | 0.30 | 0.30 | 0.30 | |
| MIKP | | | | 0.30 |
| ASD1 | 1.50 | 1.50 | 1.50 | 1.50 |

Formulations HF 1 and HF4 are examples of compositions according to the invention suitable to form an IPN, and HF2 and HF3 are examples of compositions according to the invention suitable to form an HPN. These formulations were shown to sustain a hybrid frontal polymerization reaction (data not shown).

## Claims

1. A photopolymerizable composition curable by frontal polymerization **characterized in that** it comprises
[a] a cycloaliphatic epoxy resin;
[b] a cationic photoinitiator;
[c] a thermal acid generator; and
[d] a reaction front modulator agent for modulation the reaction front of the photopolymerization reaction, wherein said reaction front modulator agent is selected from the group consisting of a modified amino acid derivative, a polyol, an oxetane, and a combination thereof.

2. The composition according to claim 1, wherein said reaction front modulator agent is a modified amino acid derivative, preferably a polymer-modified amino acid derivative or an acylated amino acid derivative.

3. The composition according to claim 1, wherein said reaction front modulator agent is a polyol.

4. The composition according to claim 1, wherein said reaction front modulator agent is an oxetane.

5. The composition according to claim 1, wherein said reaction front modulator agent is a combination of a modified amino acid derivative and/or a polyol, and an oxetane.

6. The composition according to any one of claims 1 to 5, wherein said composition further comprises a filler as a conductivity modifying agent, preferably a thermally conductive filler such as alumina or boron nitride, or a non-thermally conductive filler such a pyrogenic or fumed silica.

7. The composition according to any one of claims 1 to 6, wherein said cationic photoinitiator is a cationic photoinitiator of the onium salt type, preferably said cationic photoinitiator is a iodonium salts such as diaryliodonium hexafluorophosphate (PF₆⁻) and diaryliodonium hexafluoroantimonate (SbF₆⁻), or a sulfonium salt such as triarylsulfonium hexafluorophosphate (PF₆⁻) and triarylsulfonium hexafluoroantimonate (SbF₆⁻).

8. The composition according to any one of claims 1 to 7, wherein said thermal acid generator is a thermal acid generator of the onium salt type, preferably said thermal acid generator is a hexafluoro antimoniate-based thermal acid generator.

9. The composition according to any one of claims 1 to 8, wherein the concentration of said cationic photoinitiator is of at least 0.5%wt, preferably within the range from 0.5%wt to 15%wt, and more preferably within the range from 0.5%wt to 6%wt or 2%wt to 6%wt, and even more preferably within the range from 4%wt to 6%wt, with respect to the total weight of said composition.

10. The composition according to any one of claims 1 to 9, wherein the concentration of said thermal acid generator is of at least 0.1 %wt, preferably within the range from 0.1 %wt to 7%wt, more preferably within the range from 0.2%wt to 5%wt, and even more preferably within the range from 0.4%wt to 1%wt or 0.5%wt to 0.8%wt, with respect to the total weight of said composition.

11. The composition according to any one of claims 1 or 4 to 10, wherein the concentration of said oxetane is within the range from 10%wt to 30% with respect to the total weight of said composition.

12. The composition according to any one of claims 1, 3, or 5 to 11, wherein the concentration of said polyol is within the range from 1%wt to 50%wt, preferably within the range from 5%wt to 50%wt, more preferably within the range from 10%wt to 40%wt, even more preferably within the range from 20%wt to 30%wt, with respect to the total weight of said composition.

13. The composition according to any one of claims 1, 2 or 5 to 12, wherein the concentration of said modified amino acid derivative is within the range from 0.1%wt to 5%wt, preferably within the range from 0.5%wt to 3%wt, and more preferably within the range from 1%wt to 2%wt, with respect to the total weight of said composition.

14. Use of a composition according to any one of claims 1 to 13 as an adhesive.

15. Use of a composition according to any one of claims 1 to 13 to manufacture of a composite material.
